# EUROPÄISCHE PATENTSCHRIFT

(11) **EP 1 737 693 B1**
(45) Veröffentlichungstag und Bekanntmachung des Hinweises auf die Patenterteilung: **24.06.2009**
(21) Anmeldenummer: 05729350.8
(22) Anmeldetag: 21.04.2005
(51) Int. Cl.: B60K 7/00, A61G 5/04

(54) **NABENANTRIEB FÜR KLEINFAHRZEUGE**
HUB DRIVE FOR SMALL VEHICLES
SYSTEME D'ENTRAINEMENT DE MOYEU POUR PETIT VEHICULE

(30) Priorität: 22.04.2004 CH 702042004
(43) Veröffentlichungstag der Anmeldung: 03.01.2007
(73) Patentinhaber: Micro-Motor AG, 4106 Therwil (CH)
(72) Erfinder: BORNGRÄBER, Oliver, 79674 Todtnau (DE); CHEVROLET, Jean-Claude, ch-4153 Reinach (CH)
(74) Vertreter: Groner, Manfred
(86) Internationale Anmeldenummer: PCT/CH2005/000220
(87) Internationale Veröffentlichungsnummer: WO 2005/102760

(56) Entgegenhaltungen:
- EP-A- 0 528 235
- DE-A1- 3 924 817
- DE-U1- 29 803 665

## Beschreibung

Die Erfindung betrifft einen Nabenantrieb für Kleinfahrzeuge nach dem Oberbegriff des Anspruchs 1.

Solche Nabenantriebe sind insbesondere für Rollstühle bekannt. Der Nabenantrieb ist als Radnabe eines Laufrades ausgebildet, wobei die genannte Achse achsial über die Radnabe vorsteht und beispielsweise als lösbare am Gestell verankerte Steckachse ausgebildet ist.

Ein Nabenantrieb dieser Art ist im Stand der Technik beispielsweise aus der EP 0 528 235 A (beinhaltet die Merkmale des Oberbegriffs des Anspruchs 1) bekannt geworden. Bei diesem ist zwischen der Welle des Rotors und dem Nabengehäuse ein zweistufiges Planetengetriebe angeordnet. Dieses Planetengetriebe ist hemmend und kann konstruktiv vergleichsweise aufwändig entkoppelt werden. Der Motor ist ein bürstenloser Gleichstrommotor, der mit einer vergleichsweise aufwändigen Elektronik gesteuert ist. Auf der dem Gestell zugewandten Seite des Getriebes ist eine elektrisch entriegelbare Bremse angeordnet.

Ein weiterer Nabenantrieb ist aus der DE 298 03 665 U bekannt geworden. Dieser Antrieb weist einen Motor mit einem getriebelosen Aussenläufer auf und erfordert ebenfalls eine vergleichsweise aufwändige Elektronik für den Motor. Vorgesehen ist zudem eine Bremse, welche direkt auf die Radnabe wirkt. Die entriegelbare Bremse muss sehr leistungsstark ausgebildet sein, da sie direkt auf die Radnabe wirkt.

Der Erfindung liegt die Aufgabe zugrunde, einen Nabenantrieb der genannten Art zu schaffen, der sich insbesondere für den Antrieb eines Rollstuhls eignet und der wesentlich kostengünstiger herstellbar aber trotzdem funktionssicher ist.

Die Aufgabe wird bei einem gattungsgemässen Nabenantrieb gemäss Anspruch 1 gelöst. Beim erfindungsgemässen Nabenantrieb ist eine aufwändige Entriegelung des Getriebes nicht erforderlich. Dadurch können die Herstellungskosten wesentlich gesenkt werden.

Die Bremse ist an einem äusseren Ende der Welle angeordnet ist. Dadurch kann diese vergleichsweise einfach ausgebildet und mittels eines Handhebels entriegelt werden.

Die Bremse ist zudem auf der dem genannten Gestell abgewandeten Seite des Getriebes angeordnet ist.

Die Herstellungskosten können dann noch weiter gesenkt werden, wenn gemäss einer Weiterbildung der Erfindung der Motor ein Kollektormotor ist. Eine aufwändige Elektronik für einen EC-Motor kann damit vermieden werden.

Nach einer Weiterbildung der Erfindung ist vorgesehen, dass die Nabe ein im Wesentlichen geschlossenes Gehäuse mit einem inneren Gehäuseteil und einem äusseren Gehäuseteil aufweist. Damit ergibt sich eine besonders kompakte und gegen Verschmutzung geschützte Anordnung.

Nach einer Weiterbildung der Erfindung ist vorgesehen, dass am vorstehenden Ende der Achse ein Halter angebracht ist, mit dem die Nabe an einem Träger des genannten Gestells befestigbar ist. Der Halter wird vorzugsweise auf den Träger aufgesteckt oder aufgeschoben.

Nach einer Weiterbildung der Erfindung weist der genannte Halter zwei Zapfen auf, die von unten in zwei korrespondierende Bohrungen des Trägers einsetzbar sind. Vorzugsweise werden die Zapfen beim Einschieben in die Bohrungen selbsttätig verrastet. Das Entrasten ist dann besonders einfach und sicher, wenn die Rastmittel mit einem am Träger gelagerten Hebel lösbar sind.

Nach einer Weiterbildung der Erfindung weist der Träger eine Ausnehmung auf, in welche der Halter radial einschiebbar ist. Vorzugsweise wird der Halter beim Einschieben im Träger selbsttätig verriegelt. Die Verriegelung wird vorzugsweise mit einem Hebel gelöst, der am Träger schwenkbar gelagert ist.

Eine besonders kleine Bautiefe und kompakte Bauweise kann dann erreicht werden, wenn der Gleichstrommotor einen Kollektor aufweist, der im Wesentlichen ohne achsialen Überstand in einer Ausnehmung des Rotors angeordnet ist.

Weitere vorteilhafte Merkmale ergeben sich aus den abhängigen Patentansprüchen, der nachfolgenden Beschreibung sowie der Zeichnung. Es zeigen:
- Figur 1: ein Schnitt durch einen erfindungsgemässen Nabenantrieb,
- Figur 2: eine radiale Ansicht der Achse des Nabenantrieb sowie ein Träger des Fahrzeuges, an dem der Nabenantrieb lösbar befestigt ist,
- Figur 3: ein Schnitt entlang der Linie III-III der Figur 2
- Figur 4: ein Schnitt entlang der Linie IV-IV der Figur 3
- Figur 5: ein Schnitt entlang der Linie V-V der Figur 3
- Figur 6: eine räumliche Ansicht der Achse des Nabenmotors und des Trägers vor dem Herstellen der Verbindung,
- Figur 7: ein Schnitt durch eine Variante einer Kupplung zwischen dem Nabenmotor und einem Träger des Gestells,
- Figur 8: ein Schnitt entlang der Linie VIII-VIII der Figur 7 und
- Figur 9: eine räumliche Ansicht der Kupplung gemäss Figur 7, wobei die beiden Kupplungsteile getrennt sind.

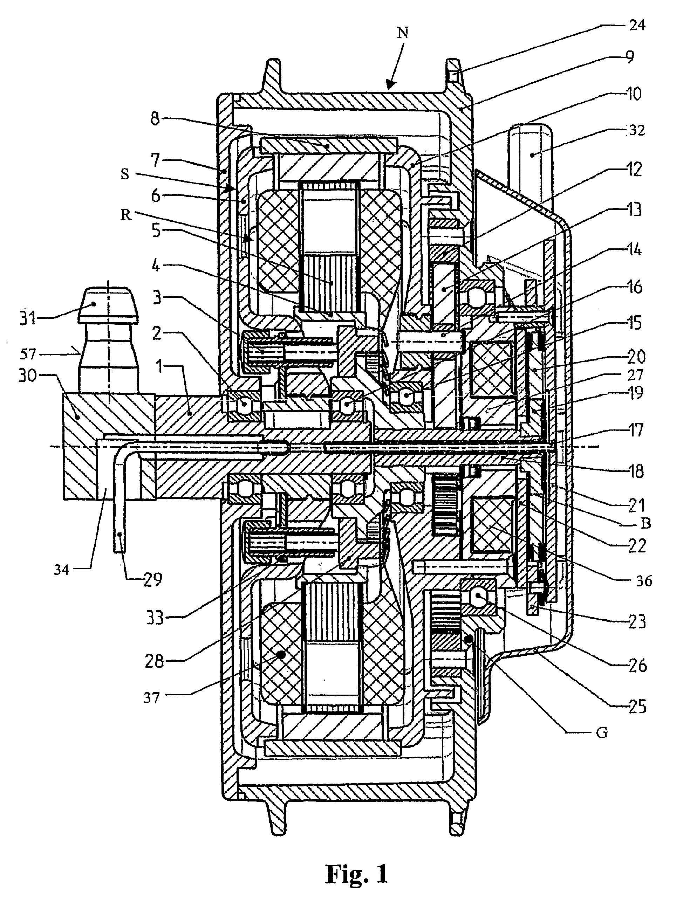

Der Nabenantrieb besitzt gemäss Figur 1 eine Achse 1, die an der Innseite eines Nabengehäuses N vorsteht und die zur Durchführung eines elektrischen Kabels 29 einen Durchgang 34 besitzt, der radial nach unten offen ist. An der Achse 1 ist ein Halter ??? befestigt, mit dem der Nabenantrieb an einem hier nicht gezeigten Gestell eines Rollstuhls oder an einem anderen Kleinfahrzeug befestigbar ist. Auf die Achse 1 ist ein Kugellager 2 aufgesetzt, mit dem ein Nabegehäuseteil 7 rotierbar auf der Achse 1 gelagert ist. Weiter ist auf die Achse 1 drehfest ein Stator S aufgesetzt, der einen bürstenseitigen Polringträger 6, einen weiteren Polringträger 10 sowie ein Polringrohr 8 aufweist. Schliesslich ist auf die Achse 1 ein Lager 16 zur rotierbaren Lagerung eines Rotors R aufgesetzt. Der Rotor R besitzt Rotorspulen 37 sowie in einem Rotorpaketträger 4 Blechpakete 5. Der Rotor R besitzt zudem eine eingepresste Welle 18, an der am freien Ende drehfest ein Mitnehmer 19 einer Bremse B befestigt ist. Mit einem Kugellager 15 ist der Rotor R im Stator S abgestützt.

Der Stator S und der Rotor R bilden einen Kollektormotor. Der Motor ist zudem ein Gleichstrommotor und wird über das Kabel 29 aus einem hier nicht gezeigten Akkumulator oder einer anderen Stromquelle gespeist, die am genannten Gestell des Kleinfahrzeuges angeordnet ist. Der Kollektormotor wird über eine bekannte Standardelektronik gesteuert. Eine Bürstenbrücke 3, die mit einer Flächenisolation 33 unterlegt ist und am Polträgerring 6 angeschraubt ist kommutiert mittels Kollektor 28 die Spulen des Rotors. Am Polringrohr 8 sind innenseitig Magnete angeklebt. Wie die Figur 1 zeigt, ist der Kollektor 28 in einer Ausnehmung des Rotors R angeordnet und bildet keinen achsialen Überstand. Die Bürstenbrücken 3 greifen entsprechend in diese Ausnehmung ein, so dass der Nockenmotor in achsialer Richtung gesehen sehr schmal gebaut ist.

Der Rotor R weist eine eingepresste Welle 18 auf, die als Hohlwelle ausgebildet ist und durch welche eine Schutzhülle 17 für die hier nicht näher gezeigte Bremsleitung führt. Diese Bremsleitung führt zu einer Bremsspule 36, welche in einem Bremstopf 27 angeordnet ist, der mit dem Polringträger 10 verschraubt ist und somit ein Teil des Stators S bildet.

Die Welle 18 wirkt über Planetenräder 13 und ein Hohlrad 12 auf den Nabengehäuseteil 9. Das Hohlrad 12 ist fest mit dem Nabengehäuseteil 9 verschraubt. Die Planetenräder 13 sind jeweils mit Zylinderstift 14 drehbar am Polringträger 10 gelagert, sie kämmen mit einer stirnseitigen Zahnung mit der Welle 18. Die Planetenträger 13 drehen somit jeweils um eine feststehende Achse, welche durch ein Zylinderstift 14 gebildet wird. Durch die Planetenräder 13 und das Sonnenrad 12 sowie die Welle 18 wird ein nichthemmendes Getriebe gebildet. Wie ersichtlich ist dieses Getriebe zwischen dem Kollektor 28 und dem Mitnehmer 19 angeordnet. Die Bremse B befindet sich somit an der Aussenseite des Getriebes.

Die Bremse B weist eine Bremsscheibe 20 auf, die vorzugsweise mit einem hier nicht näher gezeigten Bremsbelag versehen ist. Im Abstand zum Bremstopf 27 ist eine Grundplatte 21 angeordnet, die einen Teil der Bremse B bildet und die mit dem Bremstopf 27 verschraubt ist. Zwischen der Grundplatte 21 und dem Bremstopf 27 sind der Bremsteller 22 und die Bremsscheibe 20 angeordnet. Am Bremshebel 23 kann von Hand die Bremse B entriegelt werden. Die Bremse B wirkt bei einem Bremsvorgang zuerst auf die Welle 18 und von dieser über das Getriebe G auf den Nabengehäuseteil 9. An diesem sind in üblicher Weise hier nicht gezeigte Speichen angeordnet, zu deren Befestigung Löcher 24 vorgesehen sind. Diese Speichen sind mit einer hier nicht gezeigten Felge verbunden. An der Aussenseite des Nabengehäuseteils 9 ist eine Abdeckhaube 25 abnehmbar befestigt. Da die Bremse B wie erwähnt aussenseitig angeordnet ist, ist diese nach dem Entfernen der Abdeckhaube 25 beispielsweise für eine Revision gut zugänglich.

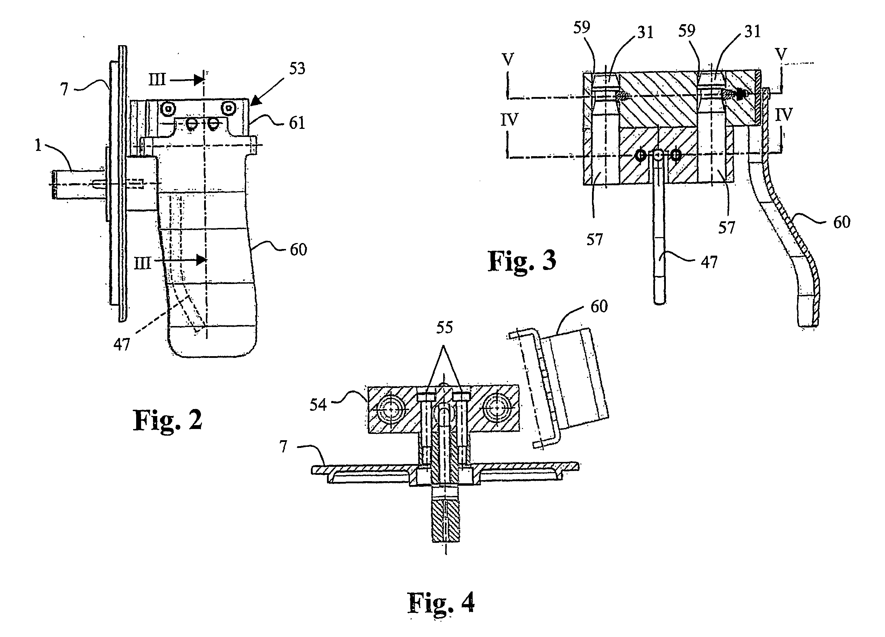

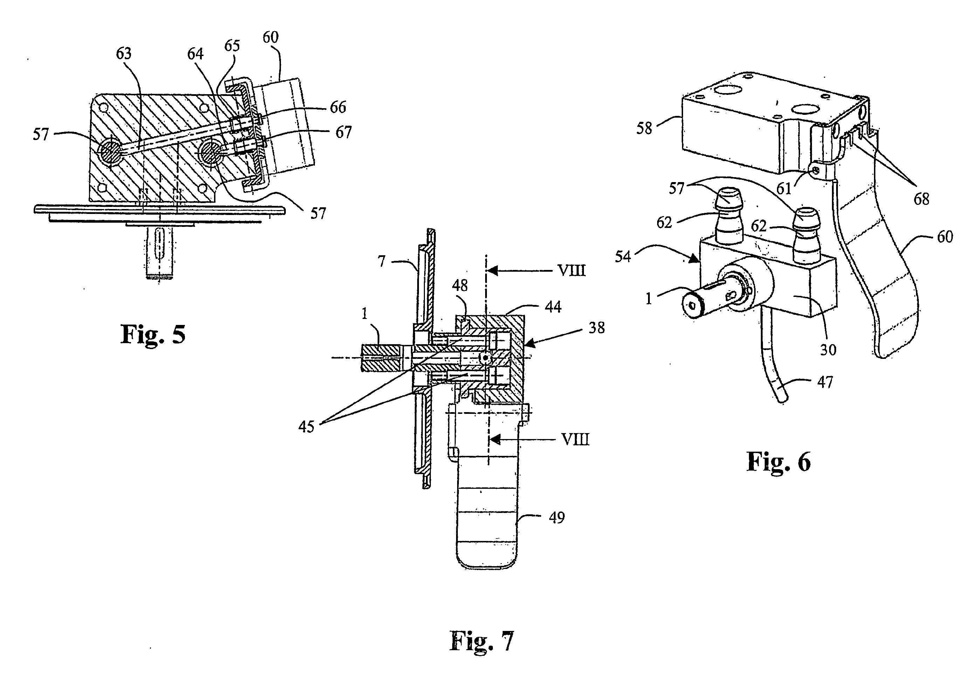

Der Nabenantrieb bzw. das Laufrad ist mit der in den Figuren 2 bis 6 gezeigten Kupplung 53 am Gestell des Kleinfahrzeugs bzw. des Rollstuhls befestigt. Die Kupplung 53 ermöglicht ein einfaches und schnelles Abnehmen des Laufrades für den Transport. Die Kupplung 53 weist einen Träger 58 auf, der fest mit dem hier nicht gezeigten Gestell des Kleinfahrzeuges verbunden ist. In diesen Träger 58 sind zwei im Abstand zueinander angeordnete Bohrungen eingearbeitet, die im gekuppelten Zustand jeweils einen Zapfen 57 aufnehmen. Diese Zapfen 57 sind jeweils von unten in eine der Bohrungen 59 eingesetzt. Die Zapfen 57 besitzen jeweils an einem oberen Ende einen Kopf 31, unter dem sich eine umlaufende Nut 62 befindet. Die Nuten 62 bilden jeweils Rastnuten, in die im gekoppelten Zustand ein Rastelement 63 bzw. 64 eingreift. Wie die Figur 5 zeigt, sind diese beiden Rastelemente 63 und 64 im Träger 58 gelagert und jeweils mittels einer Feder 65 in der Rastposition gehalten. Die Rastelemente 63 und 64 besitzen jeweils einen Mitnehmer 66 bzw. 67, mit dem sie an einem einarmigen Hebel 60 angelängt sind, der um eine Achse 61 schwenkbar am Träger 58 gelagert ist. Durch Verschwenken des Hebels 16 können die beiden Rastelemente 63 und 64 gegen die rückwirkende Kraft der Federn 65 verschoben und damit der Rasteingriff aufgehoben werden. Danach können die beiden Zapfen 57 aus den Bohrungen 59 herausgezogen werden. Der Halter 54 und damit das Laufrad können auf diese Weise ausgekoppelt werden. Über die beiden Zapfen 57 kann gleichzeitig ein Stromkabel 47 angeschlossen werden. Der Halter 54 bildet damit gleichzeitig einen elektrischen Stecker. Zur Befestigung des Halters 54 sind gemäss Figur 4 zwei Befestigungsschrauben 55 vorgesehen, welche den Halter 54 durchgreifen und in die Achse 1 eingeschraubt sind. Der Hebel 60 ist gemäss Figur 4 bezüglich der Achse 1 geneigt, sodass dieser etwas von den Speichen des Laufrades abgerückt und damit sicher zugänglich ist. Die beiden Rastelemente 63 und 64 verlaufen entsprechend der Figur 5 geneigt zur Längsachse des Laufrades.

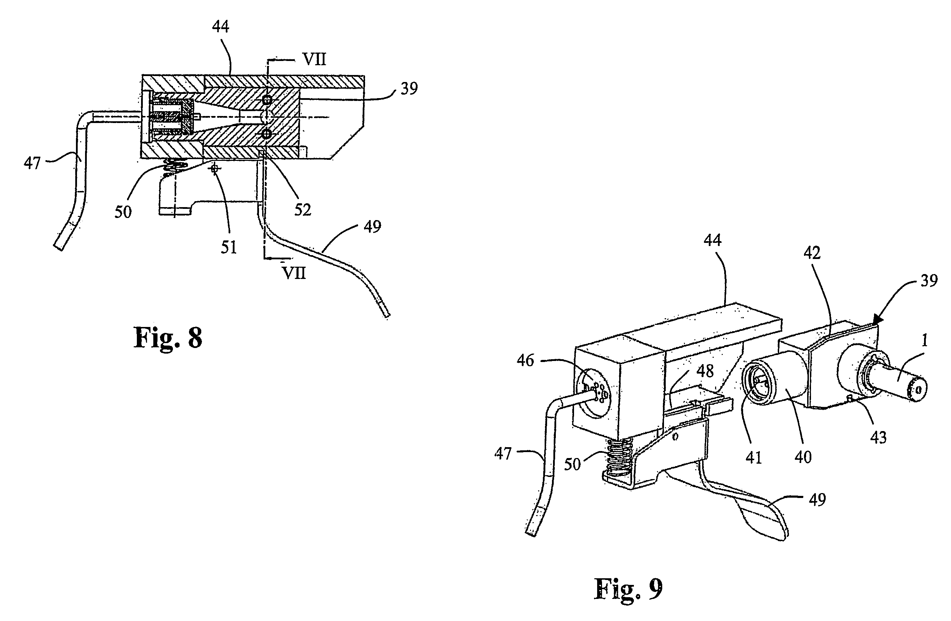

Die Figuren 7 bis 9 zeigen eine Kupplung 38, die eine Variante zur Kupplung 53 bildet. Die Kupplung 38 weist einen Halter 39 auf, der fest mit der Achse 1 verbunden ist und der mit einem Träger 44 kuppelbar ist. Der Träger 44 ist fest mit dem hier nicht gezeigten Gestell des Kleinfahrzeuges verbunden. Der Halter 39 ist als Schieber ausgebildet und besitzt einen Flansch 42, der gemäss Figur 9 oben und unten vorsteht. Am unteren Teil des Flansches 42 ist eine Ausnehmung 43 angeordnet, in welche im gekuppelten Zustand ein Verriegelungsteil 52 eines einarmigen Hebels 49 eingreift. Der Flansch 42 wird beim Kuppeln in korrespondierende Nuten 48 des Trägers 44 eingeschoben. Ist der Halter 39 vollständig in den Träger 44 eingeschoben, so rastet der Verriegelungsteil 52 unter der Wirkung einer Druckfeder 50 selbsttätig in die Ausnehmung 43 ein. Wird der Hebel 49 gegen die rückwirkende Kraft der Druckfeder 50 um eine Achse 51 verschwenkt, so wird die Rastverbindung zwischen dem Träger 44 und dem Halter 39 gelöst. Der Halter 39 kann hier aus dem Träger 44 herausgezogen werden.

Am Halter 39 ist ein Stecker 40 mit Steckerstiften 41 angeordnet. Am Träger 44 befindet sich eine entsprechende Buchse 46, welche im gekoppelten Zustand diesen Stecker 40 aufnimmt und damit eine elektrische Verbindung des Kabels 29 mit einem Kabel 47 herstellt. Beim Entkuppeln wird diese elektrische Verbindung selbsttätig getrennt. Umgekehrt wird beim Kuppeln die elektrische Verbindung selbsttätig hergestellt.

### Bezugszeichenliste

- 1: Achse
- 2: Lager
- 3: Bürstenbrücke
- 4: Rotorpaketträger
- 5: Blechpaket
- 6: Polringträger (Bürstenseite)
- 7: Nabengehäuseteil
- 8: Polringrohr
- 9: Nabengehäuseteil
- 10: Polringträger
- 11: --
- 12: Hohlrad
- 13: Planetenräder
- 14: Zylinderstift
- 15: Kugellager
- 16: Lager
- 17: Schutzhülle (Bremsleitung)
- 18: Rotorwelle
- 19: Mitnehmer
- 20: Bremsscheibe
- 21: Grundplatte
- 22: Bremsteller
- 23: Bremshebel
- 24: Speichenbohrung
- 25: Abdeckhaube
- 26: --
- 27: Bremstopf
- 28: Kollektor
- 29: Kabel
- 30: Halter
- 31: Kopf
- 32: Bremshebelgriff
- 33: Flächenisolation
- 34: Durchgang
- 35: --
- 36: Spule
- 37: Rotorspule
- 38: Kupplung
- 39: Halter
- 40: Stecker
- 41: Kontaktstifte
- 42: Flansch
- 43: Ausnehmung
- 44: Träger
- 45: --
- 46: Buchse
- 47: Stromkabel
- 48: Nuten
- 49: Hebel
- 50: Druckfeder
- 51: Achse
- 52: Verriegelungsteil
- 53: Kupplung
- 54: --
- 55: Befestigungsschraube
- 56: --
- 57: Zapfen
- 58: Träger
- 59: Bohrung
- 60: Hebel
- 61: Drehachse
- 62: Rastnut
- 63: Rastelement
- 64: Rastelement
- 65: Druckfeder
- 66: Mitnehmer
- 67: Mitnehmer
- 68: Schlitze
- B: Bremse
- G: Getriebe
- N: Nabengehäuse
- R: Rotor
- S: Stator

## Patentansprüche

1. Nabenantrieb für ein Kleinfahrzeug, insbesondere Rollstuhl, mit einem in der Nabe (N) angeordneten Gleichstrommotor, mit einem Getriebe (G), welches eine Welle (18) des Rotors (R) mit einem Nabengehäuse (9) verbindet, mit einer Achse (1), die lösbar an einem Gestell des Kleinfahrzeuges befestigbar ist und mit einer in der Nabe (N) angeordneten elektromagnetischen Bremse (B), die über die Welle (18) des Rotors (R) auf das Getriebe (G) wirkt, **dadurch gekennzeichnet, dass** das Getriebe (G) nichthemmend ausgebildet und die Bremse (B) entriegelbar ist, wobei die Bremse (B) an einem äusseren Ende der genannten Welle (18) auf der dem genannten Gestell abgewandten Seite des Getriebes (G) angeordnet und von Hand an einem Bremshebelgriff (32) entriegelbar ist.

2. Antrieb nach Anspruch 1, **dadurch gekennzeichnet, dass** der Motor ein Kollektormotor mit einer Standardelektronik ist.

3. Antrieb nach Anspruch 1 oder 2, **dadurch gekennzeichnet, dass** die Nabe (N) ein im Wesentlichen geschlossenes Gehäuse mit einem inneren Gehäuseteil (7) und einem äusseren Gehäuseteil (9) aufweist.

4. Antrieb nach einem der Ansprüche 1 bis 3, **dadurch gekennzeichnet, dass** an einem vorragenden Ende der genannten Achse (1) ein Halter (39, 54) angebracht ist, mit dem die Nabe (N) bzw. das Laufrad an einem Träger (44, 58) des genannten Gestelles lösbar befestigbar ist.

5. Antrieb nach Anspruch 4 sowie Gestell eines Kleinfahrzeuges, an dem der Antrieb befestigt ist, **dadurch gekennzeichnet, dass** am Gestell des Kleinfahrzeuges ein Träger (44, 58) befestigt ist und dass der Halter (39, 54) auf den Träger (44, 58) aufgesteckt oder aufgeschoben ist.

6. Antrieb nach Anspruch 5, **dadurch gekennzeichnet, dass** am Halter (54) wenigstens ein Zapfen (57) angeordnet ist, der in einer korrespondierenden Bohrung (59) des Trägers (58) eingesetzt ist.

7. Antrieb nach Anspruch 6, **dadurch gekennzeichnet, dass** der Träger (58) Rastmittel (63, 64) aufweist, sodass der Zapfen (57) beim Einschieben in die Bohrungen (59) selbsttätig mit dem Träger (58) verrastet wird.

8. Antrieb nach Anspruch 7, **dadurch gekennzeichnet, dass** die Rastmittel (63, 64) mit einem am Träger (58) schwenkbar gelagerten Hebel (60) lösbar sind.

9. Antrieb nach Anspruch 8, **dadurch gekennzeichnet, dass** der Halter (39) als Schieber ausgebildet ist und dass der Träger (44) eine Ausnehmung (43) aufweist, in welche der Halter (39) radial einschiebbar ist.

10. Antrieb nach Anspruch 9, **dadurch gekennzeichnet, dass** der Halter (39) einen Steckverbinder (40) und der Träger (44) eine Steckbuchse (46) aufweist.

11. Antrieb nach Anspruch 10, **dadurch gekennzeichnet, dass** der Halter (39) eine Ausnehmung (43) aufweist, in welche ein Verriegelungsteil (52) eines Hebels (60) eingerastet ist.

12. Antrieb nach einem der Ansprüche 1 bis 11, **dadurch gekennzeichnet, dass** die Bremse (B) elektrisch entriegelbar ist.

13. Antrieb nach einem der Ansprüche 1 bis 12, **dadurch gekennzeichnet, dass** der Gleichstrommotor einen Kollektor (28) aufweist, der im Wesentlichen ohne achsialen Überstand in einer Ausnehmung des Rotors (R) angeordnet ist.

## Claims

1. Hub drive for a small vehicle, in particular a wheelchair, having a DC motor which is arranged in the hub (N), having a gear mechanism (G) which connects a shaft (18) of the rotor (R) to a hub housing (9), having an axle (1) which can be detachably fixed to a frame of the small vehicle, and having an electromagnetic brake (B) which is arranged in the hub (N) and acts on the gear mechanism (G) via the shaft (18) of the rotor (R), **characterized in that** the gear mechanism (G) is of non-self-locking design and the brake (B) can be unlocked, with the brake (B) being arranged on that side of the gear mechanism (G) which is averted from the said frame at an outer end of the said shaft (18) and it being possible to unlock the said brake manually using a brake lever handle (32).

2. Drive according to Claim 1, **characterized in that** the motor is a collector motor with a standard electronics system.

3. Drive according to Claim 1 or 2, **characterized in that** the hub (N) has an essentially closed housing with an inner housing part (7) and an outer housing part (9).

4. Drive according to one of Claims 1 to 3, **characterized in that** a holder (39, 54) is fitted at a protruding end of the said axle (1), the said holder being used to detachably fix the hub (N) or the running wheel to a support (44, 58) of the said frame.

5. Drive according to Claim 4 and frame of a small vehicle to which the drive is fixed, **characterized in that** a support (44, 58) is fixed to the frame of the small vehicle, and **in that** the holder (39, 54) is plugged or pushed onto the support (44, 58).

6. Drive according to Claim 5, **characterized in that** at least one pin (57) is arranged on the holder (54) and is inserted into a corresponding hole (59) in the support (58).

7. Drive according to Claim 6, **characterized in that** the support (58) has latching means (63, 64) so that the pin (57) is automatically latched to the support (58) when it is inserted into the holes (59).

8. Drive according to Claim 7, **characterized in that** the latching means (63, 64) can be released using a lever (60) which is pivotably mounted on the support (58).

9. Drive according to Claim 8, **characterized in that** the holder (39) is in the form of a slide, and **in that** the support (44) has a recess (43) into which the holder (39) can be radially inserted.

10. Drive according to Claim 9, **characterized in that** the holder (39) has a plug connector (40) and the support (44) has a plug receptacle (46).

11. Drive according to Claim 10, **characterized in that** the holder (39) has a recess (43) into which a locking part (52) of a lever (60) is latched.

12. Drive according to one of Claims 1 to 11, **characterized in that** the brake (B) can be unlocked electrically.

13. Drive according to one of Claims 1 to 12, **characterized in that** the DC motor has a collector (28) which is arranged in a recess of the rotor (R), essentially without an axial projection.

## Revendications

1. Entraînement de moyeu pour un petit véhicule, en particulier un fauteuil roulant, comprenant un moteur à courant continu disposé dans le moyeu (N), avec une transmission (G) qui relie un arbre (18) du rotor (R) à un boîtier du moyeu (9), avec un essieu (1) qui peut être fixé de manière amovible sur un bâti du petit véhicule, et comprenant un frein (B) électromagnétique disposé dans le moyeu (N), lequel agit par le biais de l'arbre (18) du rotor (R) sur la transmission (G), **caractérisé en ce que** la transmission (G) est réalisée de manière non bloquante et le frein (B) peut être déverrouillé, le frein (B) étant disposé à une extrémité extérieure dudit arbre (18) du côté de la transmission (G) opposé audit bâti et pouvant être déverrouillé manuellement avec une poignée de frein à main (32).

2. Entraînement selon la revendication 1, **caractérisé en ce que** le moteur est un moteur à collecteur avec une électronique standard.

3. Entraînement selon la revendication 1 ou 2, **caractérisé en ce que** le moyeu (N) présente un boîtier essentiellement fermé avec une partie de boîtier intérieure (7) et une partie de boîtier extérieure (9).

4. Entraînement selon l'une quelconque des revendications 1 à 3, **caractérisé en ce qu'**un dispositif de retenue (39, 54) est monté sur une extrémité saillante dudit essieu (1), avec lequel le moyeu (N) ou la roue volante peut être fixé(e) de manière amovible sur un support (44, 58) dudit bâti.

5. Entraînement selon la revendication 4, et bâti d'un petit véhicule, sur lequel est fixé l'entraînement, **caractérisé en ce qu'**un support (44, 58) est fixé sur le bâti du petit véhicule et **en ce que** le dispositif de retenue (39, 54) est enfiché ou poussé sur le support (44, 58).

6. Entraînement selon la revendication 5, **caractérisé en ce qu'**au moins un tourillon (57) est disposé sur le dispositif de retenue (54), lequel est inséré dans un alésage correspondant (59) du support (58).

7. Entraînement selon la revendication 6, **caractérisé en ce que** le support (58) présente des moyens d'encliquetage (63, 64) de sorte que le tourillon (57) s'encliquète automatiquement avec le support (58) lors de l'insertion dans les alésages (59).

8. Entraînement selon la revendication 7, **caractérisé en ce que** les moyens d'encliquetage (63, 64) peuvent être détachés avec un levier (60) monté de manière pivotante sur le support (58).

9. Entraînement selon la revendication 8, **caractérisé en ce que** le dispositif de retenue (39) est réalisé sous forme de coulisseau et **en ce que** le support (44) présente un évidement (43) dans lequel le dispositif de retenue (39) peut être inséré radialement.

10. Entraînement selon la revendication 9, **caractérisé en ce que** le dispositif de retenue (39) présente un raccord enfichable (40) et le support (44) présente une douille enfichable (46).

11. Entraînement selon la revendication 10, **caractérisé en ce que** le dispositif de retenue (39) présente un évidement (43), dans lequel une partie de verrouillage (52) d'un levier (60) est encliquetée.

12. Entraînement selon l'une quelconque des revendications 1 à 11, **caractérisé en ce que** le frein (B) peut être déverrouillé électriquement.

13. Entraînement selon l'une quelconque des revendications 1 à 12, **caractérisé en ce que** le moteur à courant continu présente un collecteur (28) qui est disposé essentiellement sans dépassement axial dans un évidement du rotor (R).
